# NOUVEAU FASCICULE DE BREVET EUROPEEN

(11) **EP 2 810 562 B2**
(45) Date de publication et mention de la décision concernant l'opposition: **19.01.2022**
(45) Mention de la délivrance du brevet: 30.01.2019
(21) Numéro de dépôt: 14001914.2
(22) Date de dépôt: 03.06.2014
(51) Int. Cl.: A23D 7/005, A23D 7/05

(54) **Procédé d'obtention d'une margarine**
Verfahren zum Erhalten einer Margarine
Method for obtaining a margarine

(30) Priorité: 03.06.2013 FR 1301253
(43) Date de publication de la demande: 10.12.2014
(73) Titulaire: St. Hubert, 94150 Rungis (FR)
(72) Inventeur: Marchal, Norbert, 54 122 Flin (FR); Ferrari, Audrey, 54 500 Vandoeuvre-Les-Nancy (FR)
(74) Mandataire: Barbot, Willy

(56) Documents cités:
- EP-A1- 2 052 628
- EP-A1- 2 810 562
- EP-A2- 0 285 198
- WO-A1-00/64268
- WO-A1-2006/039991
- WO-A1-2014/139762
- DE-A1- 2 245 814
- GB-A- 932 993
- GB-A- 1 261 910
- GB-A- 1 333 938
- US-A- 2 937 093
- US-A- 3 944 680
- "Margarine Production - Technology and Process", SPX White Paper, July 2012 (2012-07), pages 1-9,
- F.J. MASSIELLO et al.: "Changing Trends in Consumer Margarines", Journal of the American Oil Chemists' Society, vol. 55, February 1978 (1978-02), pages 262-265,
- LARS H. WIEDERMANN et al.: "Margarine and Margarine Oil, Formulation and Control", Journal of the American Oil Chemists, vol. 55, November 1978 (1978-11), pages 823-829, DOI: 10.1007/BF02682655
- Fereidoon Shahidi: "Bailey's Industrial Oil And Fat Products, 6th ed.", 2005 vol. 4, page 67, * prior art under Article 54(2) EPC. *

## Description

### Domaine de l'invention

La présente invention est relative au domaine des émulsions comestibles. L'invention est définie par les revendications.

### Arrière plan technologique de l'invention

La société actuelle est particulièrement sensibilisée aux problèmes de santé conditionnés par le mode de vie, et notamment le comportement alimentaire des individus. En effet, les avancées médicales et l'augmentation de l'espérance de vie contribuent à l'apparition de nouvelles maladies alors que d'autres disparaissent. D'un autre coté, la recherche scientifique permet une meilleure compréhension de ces pathologies et favorise leur prévention. Ainsi, les consommateurs semblent vouloir changer leurs habitudes alimentaires et leur hygiène de vie de manière à préserver au maximum leur santé.

Face à cette évolution du comportement de ses consommateurs, l'industrie agroalimentaire cherche à développer de nouveaux produits innovants favorisant la santé des individus. Ainsi, les produits nouvellement commercialisés voient souvent leur teneur en lipides ou matière grasse réduite (plus spécifiquement en acides gras saturés), dans l'idée de limiter les risques d'obésité, de maladie cardiovasculaire ou de diabète par exemple.

Les matières tartinables telles que le beurre et la margarine sont des composantes majeures du petit déjeuner, et de l'alimentation de manière générale. Leurs caractéristiques sensorielles (fonte, arôme, tartinabilité) sont dues aux propriétés physico-chimiques des lipides qu'elles renferment et sont donc fortement liées à leur richesse en matière grasse.

La diminution du taux de matière grasse dans ces aliments a pour conséquence la perte des qualités sensorielles de ces produits. Plus spécifiquement, dans la formulation de la margarine, les acides gras saturés sont connus pour jouer un rôle essentiel dans la texture et la fermeté de la margarine ; ils ralentissent de plus sa vitesse de fonte et jouent aussi un rôle dans le gout du produit.

Se pose alors le problème de développer de nouvelles matières tartinables telles que les margarines allégées en matière grasse, et notamment en acides gras saturés, tout en maintenant les propriétés organoleptiques de celles-ci, telles que leur texture, leur fermeté, leur profil de fonte leur tartinabilité, leur texture en bouche et leur gout ; lesquels critères permettant de garantir une conservation du produit dans les conditions de stockage recommandées

### Sommaire de l'invention

Les inventeurs ont mis en évidence qu'un foisonnement d'une émulsion eau-dans-huile de type margarine allégée en acides gras saturés, ledit foisonnement étant appliqué au cours de la cristallisation ou sur le produit cristallisé, permettait d'obtenir un produit allégé en matière grasse tout en maintenant des propriétés organoleptiques optimales.

Par ailleurs, ils observent qu'un tel foisonnement, appliqué à un taux plus ou moins élevé, permet d'obtenir des produits particulièrement innovants pouvant être très différents des produits de départ, et présentant des propriétés organoleptiques intéressantes en terme de texture en bouche et de goût notamment.

La présente invention est relative à un procédé d'obtention d'une margarine selon la revendication 1.

La présente invention est relative également à une margarine susceptible d'être obtenue par un tel procédé.

Enfin, l'invention porte sur l'utilisation selon la revendication 8.

### Description détaillée de l'invention

Un objet de l'invention concerne un procédé d'obtention d'une margarine, ledit procédé com-prenant les étapes de :
(i) préparation d'une phase grasse,
(ii) préparation d'une phase aqueuse,
(iii) incorporation de la phase aqueuse obtenue à l'étape (ii) dans la phase grasse obtenue à l'étape (i) sous agitation pour créer une émulsion,
(iv) pasteurisation de l'émulsion obtenue à l'étape (iii),
(v) cristallisation de l'émulsion pasteurisée à l'étape (iv), et
(vi) Foisonnement de l'émulsion simultanée ou consécutif à l'étape (v) de manière à obtenir un taux de foisonnement supérieur à 70%.

Par « margarine », on entend une graisse industrielle d'origine animale et/ou végétale émulsionnée avec de l'eau et/ou du lait ou de la crème. Les margarines selon l'invention sont comestibles.

L'étape (i) de préparation de la phase grasse est réalisée par des techniques bien connues de l'homme du métier et se fait notamment sous agitation.

La température de préparation est comprise entre 50 et 70°C, préférentiellement 60 et 68°C.

L'agitation est de préférence effectuée par un mélangeur à pâles, ou par tout autre système permettant de répondre aux exigences du mélange.

Selon un mode de réalisation préféré, l'émulsion selon l'invention contient de la matière grasse d'origine végétale ou d'origine animale, de préférence la matière grasse est d'origine végétale.

La matière grasse peut être une matière grasse unique ou une combinaison de matières grasses.

La matière grasse ou le mélange de matières grasses peut comprendre des matières grasses animales et/ou des matières grasses végétales et ou des matières grasses laitières qui peuvent être hydrogénées, interestérifiées, ou fractionnées. Les matières grasses animales adaptées comprennent le beurre. Les matières grasses végétales adaptées peuvent être choisies dans le groupe (i) des huiles (matière grasse liquide à température ambiante) comprenant l'huile de tournesol, l'huile de soja, , l'huile de graine de colza, l'huile de maïs, l'huile de lin, ainsi que toute autre huile alimentaire, ou dans le groupe (ii) des graisses (matière grasse solide à température ambiante) comprenant l'huile de palmiste, l'huile de palme, l'huile de coco, l'huile de coprah, ainsi que toute autre graisse alimentaire ; leurs fractions, ou des combinaisons de celles-ci. Les mélanges de matières grasses interestérifiées de ces matières grasses ou optionnellement avec d'autres matières grasses sont également comprises dans la présente invention.

Selon un mode de réalisation préféré, la matière grasse de l'émulsion selon l'invention comprend des acides gras polyinsaturés, de préférence des oméga-3.

Les matières grasses préférées selon l'invention comprennent des acides gras polyinsaturés (PUFA). Les PUFA préférés sont les oméga-3 et les oméga-6 tels que l'acide alpha linoléique (ALA), l'acide docosahexaénoïque (DHA) et l'acide éicosapentaénoïque (EPA). Les matières grasses dans la phase grasse dans préférentiellement des matières grasses végétales. De manière préférée, la phase grasse comprend au moins 25% de matière grasse végétale, de manière préférée au moins 35%.

Selon un mode de réalisation particulier, la phase grasse peut de plus comprendre des émulsifiants pour favoriser la dispersion de la phase aqueuse dans la phase grasse. Les émulsifiants pouvant être utilisés sont bien connus de l'homme du métier, et comprennent notamment des lécithines de soja ou encore des monoglycérides et des diglycérides.

Les émulsifiants utilisés sont de manière préférée des émulsifiants pour les émulsions eau-dans-huile, de manière encore préférée, choisis dans le groupe comprenant les monoglycérides distillés, les esters d'acide citrique de monoglycérides, les esters diacétyl acétique de monoglycérides, les esters d'acide lactique de monoglycérides, les mono- et diglycérides, les esters de polyglycérols d'acides gras, les esters de sorbitan d'acides gras ou la lécithine.

Selon l'invention, la phase grasse contient typiquement moins de 10% préférentiellement de 0,5 à 6%, plus préférentiellement moins de 5% en poids d'émulsifiants.

Selon un autre mode de réalisation particulier, la phase grasse peut aussi contenir des arômes et des colorants lipidiques tels que le β-carotène.

Selon l'invention, la phase grasse contient typiquement moins de 5% en poids d'arômes, préférentiellement moins de 1% en poids d'arômes. Selon l'invention, la phase grasse contient typiquement moins de 5%, préférentiellement moins de 1% en poids de colorants.

L'étape (ii) de préparation de la phase aqueuse est réalisée par des techniques bien connues de l'homme du métier, et se fait notamment sous agitation.

La température de préparation est comprise entre 45 et 65 °C, préférentiellement entre 50 et 60°C.

L'agitation est de préférence effectuée par un mélangeur à pâles ou par tout autre système permettant de répondre aux exigences du mélange (défloculeuse, hélice, ...). La cuve dans laquelle est préparée la phase aqueuse peut contenir une turbine et/ou un racleur.

La phase aqueuse est principalement constituée d'eau pure. Elle peut aussi contenir d'autres constituants tels que du lactosérum, babeurre, poudre de lait, fermentés ou non, des sels, préférentiellement en faible quantité, plus préférentiellement dans une quantité inférieure à 3% de la phase aqueuse, des arômes solubles, préférentiellement dans une quantité inférieure à 3% de la phase aqueuse, des texturants tels que des épaississants ou des gélifiants, préférentiellement présents dans une quantité inférieure à 5% de la phase aqueuse , des conservateurs, préférentiellement présents dans une quantité inférieure à 2% de la phase aqueuse et des antioxydants, préférentiellement dans une quantité inférieure à 2% de la phase aqueuse.

Le pH de la phase aqueuse peut être ajusté à la valeur désirée, entre autres pour influencer l'impression de goût acide ou basique et pour influencer la stabilité microbienne. De manière préférée, le pH de la phase aqueuse dans l'émulsion de l'invention est compris entre 4 et 7.

L'étape (ii) peut être réalisée en parallèle de l'étape (i) ou préalablement à celle-ci.

L'étape (iii) d'incorporation de la phase aqueuse dans la phase grasse sous agitation forte pour fabriquer une émulsion est réalisée par des techniques bien connues de l'homme du métier.

L'agitation est de préférence effectuée par un agitateur à pâles, et est de préférence forte.

Selon un mode de réalisation préféré, l'émulsion selon l'invention a une teneur en matière grasse comprise entre 10 et 95%, de préférence entre 20 et 85%, de préférence entre 30 et 70%, et de manière particulièrement préférée entre 35 et 55%. L'émulsion selon l'invention constitue alors une « matière grasse tartinable » telle que définie précédemment (Règlement (CE) n°2991/94).

Dans un mode de réalisation préféré de l'invention, la phase aqueuse incorporée représente 10 à 95% de l'émulsion finale, plus particulièrement 30 à 70%, de préférence 35 à 55%

L'émulsion de l'invention garde une consistance solide à 20°C.

De manière optionnelle, des protéines peuvent être ajoutées à l'émulsion de l'invention. Les protéines peuvent être ajoutées pour améliorer le goût, la saveur, et la valeur nutritionnelle de l'émulsion, ainsi que le foisonnement. Le pourcentage d'incorporation est typiquement de moins de 10% préférentiellement de 0.5 à 6%, plus préférentiellement moins de 5%.

De manière encore optionnelle, l'émulsion comestible de l'invention contient d'autres ingrédients tels que les conservateurs, les vitamines, les arômes, les colorants ou encore les antioxydants, préférentiellement présents dans l'émulsion dans une quantité inférieure à 2%.

L'étape (iv) de pasteurisation est réalisée par des techniques bien connues de l'homme du métier. Cette étape permet d'éliminer les germes pouvant altérer la stabilité microbiologique du produit fini.

De préférence, la pasteurisation est réalisée à une température supérieure à 70°C, préférentiellement 80 à 95°C pendant quelques secondes, préférentiellement 20 à 40 secondes.

Le traitement thermique est réalisé de préférence dans un échangeur à surface raclée ou dans un échangeur à plaques.

De manière optionnelle, le procédé de l'invention peut comprendre une étape supplémentaire d'homogénéisation successive à l'étape (iv) de pasteurisation.

Cette homogénéisation se fait préférentiellement entre 60 et 70°C, à une pression de l'ordre de 150 kg/cm³. Elle est par ailleurs préférentiellement réalisée dans un homogénéisateur à deux stades.

L'étape (v) de cristallisation de l'émulsion est réalisée par des techniques bien connues de l'homme du métier.

Elle comprend généralement une première étape de pré-refroidissement de l'émulsion.

De préférence, cette étape est réalisée de sorte d'obtenir un produit en sortie de cette étape à une température inférieure à 50°C, de préférence inférieure à 40°C. Dans un mode de réalisation préféré de l'invention, le produit obtenu après cette étape de pré-refroidissement est à une température comprise entre 30 à 45°C, préférentiellement comprise entre 35 à 40°C, plus préférentiellement d'environ/égale à 38°C.

L'étape (v) de cristallisation peut ensuite être réalisée par passages successifs de l'émulsion dans des échangeurs thermiques à surfaces raclées. Les passages dans les échangeurs thermiques sont entrecoupés d'étapes de malaxage.

De préférence, la température de sortie de l'émulsion est comprise entre 5 et 20°C, de préférence entre 10 et 15°C, et de manière particulièrement préférée de 12°C.

L'étape (vi) de foisonnement est réalisée par introduction de gaz dans l'émulsion eau-dans-huile de l'invention cristallisée ou en cours de cristallisation.

L'étape de foisonnement peut être réalisée dans tous les types de foisonneurs utilisés dans le domaine agroalimentaire : les foisonneurs statiques, les foisonneurs à pâles droites et les foisonneurs rotor-stator. Dans un mode de réalisation préféré de l'invention, l'étape de foisonnement est réalisée par introduction de l'émulsion dans un foisonneur rotor-stator dans lequel le gaz est injecté de manière simultanée.

Dans un mode de réalisation préféré de l'invention, l'émulsion est refroidie ou maintenue à une température relativement basse pendant l'étape (vii) de foisonnement. Le foisonnement est ainsi par exemple réalisé dans un foisonneur rotor-stator à double enveloppe, la double enveloppe (reliée à un bain d'huile) permettant d'abaisser ou de maintenir le mélange contenu dans le rotor-stator à une température voulue.

Le gaz est introduit dans le foisonneur de manière à former des petites bulles réparties de manière homogène dans l'émulsion.

Le gaz utilisé pour l'étape de foisonnement est un gaz inerte. Il est sélectionné en fonction de ses propriétés physico-chimiques, notamment sa solubilité, son caractère inflammable ou encore l'impact qu'il pourrait avoir sur le gout de l'émulsion finale et sur la conservation du produit (oxydation).

Il peut être choisi parmi le groupe comprenant l'azote, le diazote, l'oxyde d'azote, le dioxyde de carbone, le gaz de pétrole liquéfié (GPL), le gaz naturel liquéfié (GNL). De préférence, le gaz utilisé pour l'étape de foisonnement est le diazote.

La température de foisonnement est comprise entre 5 et 35°C, plus particulièrement entre 5 et 25°C, de préférence entre 10 et 20°C.

La pression de foisonnement est comprise entre 0.5 et 8 bar/hPa, plus particulièrement entre 2 et 6 bar/hPa, de préférence entre 3 et 5 bar/hPa.

Selon l'invention, le foisonnement appliqué à l'émulsion est important. Le taux de foisonnement est défini par le rapport Volume d'air/Volume de margarine et s'exprime en pourcentage (Taux de foisonnement = Volume d'air/Volume d'émulsion x 100).

Les inventeurs ont observé qu'un taux de foisonnement élevé appliqué à des margarines en cours de cristallisation ou cristallisées permettait d'obtenir des produits très aérés (de type mousse), légers et fondants en bouche, ainsi qu'une sensation agréable de pétillement très appréciés.

Ainsi, dans un autre mode de réalisation particulier, l'étape de foisonnement est réalisée de manière à obtenir un taux de foison nement supérieur à 90%.

Le procédé de l'invention peut enfin comprendre une étape (vii) de conditionnement.

Un deuxième objet de l'invention concerne les margarines susceptibles d'être obtenues par le procédé décrit précédemment.

Dans un autre mode de réalisation préféré, l'invention concerne des margarines susceptibles d'être obtenues par le procédé décrit précédemment caractérisé en ce que le foisonnement de l'étape (vi) est supérieur à 90%.

Ces émulsions sont très aérées et montrent des propriétés organoleptiques originales, telles qu'une légèreté et un fondant en bouche remarquable, ainsi qu'une sensation agréable de pétillement.

Les margarines de l'invention sont physiquement et chimiquement stables et sont comestibles.

Un troisième objet de l'invention concerne l'utilisation d'un taux de foisonnement d'au moins 70% d'une margarine en cours de cristallisation ou cristallisée pour l'obtention d'une margarine, ayant une teneur réduite en acides gras saturés tout en main-tenant des propriétés organoleptiques optimales, notamment en termes de texture, de fermeté et de gout.

Selon l'invention, on entend par « propriétés organoleptiques optimales » des propriétés similaires à celles d'une margarine, ayant une teneur classique en acide gras saturés. Notamment, une margarine dont la teneur en acide gras saturés est réduite et ainsi foisonnée possède une texture en bouche, un goût et un aspect visuel similaires à une margarine classique, un profil de fonte améliorée, une dureté acceptable, une tartinabilité augmentée, et des valeurs nutritionnelles optimisées de par sa teneur en acides gras saturés diminuée.

Le foisonnement appliqué peut être réalisé de manière similaire à celle décrite dans le cadre du procédé de l'invention.

Avantageusement, le taux de foisonnement appliqué est supérieur à 90%. La margarine ainsi obtenue est caractérisée par une baisse de la teneur en acides gras saturés, une texture très aérée et montre des propriétés organoleptiques originales, telles qu'une légèretéet un fondant en bouche remarquable, ainsi qu'une sensation agréable de pétillement.

Dans un mode de réalisation préféré de l'invention, le gaz utilisé pour le foisonnement est le diazote. Ce gaz limite en effet le vieillissement de l'émulsion.

Les exemples qui suivent sont fournis à titre d'illustration et ne sauraient limiter la portée de la présente invention.

### Exemples

Plusieurs émulsions de l'invention ont été mises au point, testées et optimisées.

L'objectif principal recherché était de diminuer la teneur en acide gras saturés des émulsions de type margarine, tout en maintenant leurs propriétés organoleptiques et leurs caractéristiques physico-chimiques. La solution envisagée par les inventeurs a été de compenser la baisse en acides gras saturés par un foisonnement des margarines.

Voici un exemple détaillé des expérimentations qui ont pu être réalisées pour la mise au point des émulsions de l'invention.

### ∘ Production d'une margarine de l'invention

### • Composition d'une margarine de l'invention

La phase grasse est composée d'huile de colza raffinée, d'huile de lin pour garantir un apport en oméga-3 et d'un mélange de corps gras. Elle comprend de plus de la lécithine de soja et un émulsifiant composé de mono- et de diglycérides. Ces additifs participent à la formation de l'émulsion et stabilisent le produit à la cuisson. La phase grasse est également colorée par du β-carotène et aromatisée pour donner un goût de beurre, apprécié par le consommateur.

La phase aqueuse, quant à elle, est composée en majeure partie d'eau. A cette solution sont ajoutés du sel alimentaire et des arômes pour renforcer le goût de l'émulsion (type margarine).

| Ingrédients | % sur produit fini | |
|---|---|---|
| | Emulsion A | Emulsion B |
| Huiles Fluides (type colza, lin) | 35 à 40 | 15 à 20 |
| Huiles concrètes (graisses) | 10 à 15 | 10 à 20 |
| Lécithine de soja | 0.1 à 1 | 0.1 à 1 |
| Emulsifiant (mono- et diglycérides) | 0.2 à 2 | 0.2 à 2 |
| β-carotène | 0.01 à 0.1 | 0.01 à 0.1 |
| Total phase grasse | 50 à 55 | 35 à 40 |
| Eau | 42 à 48 | 55 à 60 |
| Sel alimentaire | 0.2 à 1 | 0.1 à 1 |
| Poudre de lait | 0.5 à 2 | 1 à 3 |
| Arôme | 0.1 à 1 | 0,1 à 1 |
| Conservateur | 0.1 à 0.2 | 0.1 à 0.2 |
| Correcteur d'acidité | 0 à 0.1 | 0 à 0.1 |
| Total phase aqueuse | 45 à 50 | 60 à 65 |

**Exemples-type d'émulsions de l'invention.** Les pourcentages de chaque ingrédient peuvent varier. Deux exemples sont illustrés (émulsion A et émulsion B).

Des émulsions de type margarine comprenant des taux plus ou moins importants de matière grasse, et notamment d'acides gras insaturés, sont produites.

| | Emulsion A | Emulsion B |
|---|---|---|
| Teneur en matière grasse | 54% | 38% |
| Teneur en acides gras saturés | 15% | 18% |

**Exemples d'émulsions testées en termes de teneur en matière grasse, notamment en acides gras saturés.** Les deux exemples précédents sont repris.

### • Préparation de l'émulsion margarine

La préparation de la phase aqueuse a lieu dans une cuve équipée d'un agitateur ou dotée d'une turbine et d'un racleur supplémentaires. Le choix s'effectue en fonction de la viscosité du mélange à préparer.

La phase grasse, quant à elle, est réalisée dans une cuve adaptée pour les phases visqueuses.

La phase aqueuse est incorporée modérément dans la phase grasse, sous agitation, de manière à fabriquer l'émulsion.

Le produit ainsi formé est pasteurisé de manière à éliminer les germes pouvant altérer la stabilité microbiologique du produit fini. Le traitement thermique est réalisé dans un échangeur à surface raclée.

Des émulsions de type margarine comprenant des taux plus ou moins importants de matière grasse, et notamment d'acides gras insaturés, sont produites.

### • Cristallisation de la margarine

La cristallisation et le malaxage ont lieu successivement. Le produit passe par des cylindres de refroidissement à surface raclée afin d'amorcer la cristallisation. La régulation des températures est automatisée.

Le refroidissement, entrecoupé d'étapes de malaxage, est réalisé par des cylindres dont les doigts s'entrecroisent pour favoriser l'homogénéisation du produit et l'initiation de la cristallisation.

La cristallisation se poursuit pendant plusieurs jours à 4°C.

### • Foisonnement

Le foisonnement est réalisé à l'aide d'un foisonneur de type rotor-stator. L'incorporation de gaz est effectuée par le foisonneur continu MINI MONDO de la marque MONDOMIX.

Le foisonnement est réalisé en injectant du gaz sous forme de bulles dans la margarine en cours de cristallisation. Le débit de gaz est mesuré en millimètres par l'intermédiaire d'un tube de dosage.

Le choix du gaz s'est porté sur le diazote. Il permet de limiter les phénomènes d'oxydation contrairement à l'air et ainsi ralentir le vieillissement accéléré de la margarine.

Le gaz et la margarine sont incorporés séparément dans la tête de foisonnement où ils sont mélangés dans des conditions contrôlées (température et pression) pour obtenir un produit homogène. La tête de foisonnement se compose d'un rotor et d'un stator, les deux sont dotés d'ergots de section carrée s'imbriquant lors de la rotation.

La partie fixe de l'appareil est entourée d'une double enveloppe. Cette dernière, reliée à un bain d'huile, permet de refroidir la tête de mélange. On évite ainsi l'échauffement du produit qui peut être provoqué lors de la mise en mouvement du rotor.

Les margarines sont stockées à 4°C pendant quinze jours afin que la cristallisation s'achève.

### ∘ Optimisation des margarines produites

Dans le but d'optimiser les margarines produites, divers paramètres sont testés.

Notamment, diverses teneurs en acides gras saturés sont testées, de même que divers taux et températures de foisonnement. Seuls les taux de foisonnement supérieurs à 70% font partie de l'invention.

| Paramètres | Valeurs testées |
|---|---|
| Température de foisonnement | 5, 10, 12, 14, 16 et 18, 20, 25, 30, 35°C |
| Taux de foisonnement | 0, 2, 4, 6, 8, 10, 12 % (faible taux) |
| | 50, 60, 70, 80, 90 % (fort taux) |
| Baisse en acides gras saturés (AGS) | 0, 2, 4, 6, 8, 10, 12 |

### ∘ Analyse de la margarine produite

Différentes caractéristiques de la margarine sont alors étudiées.

Notamment, la texture, la fonte et les qualités organoleptiques sont étudiées, ainsi que son vieillissement, par mesure de l'indice de peroxyde et de la teneur en acides gras libres des produits finis.

L'analyse de texture de la margarine est réalisée dans une étuve à 30°C, pendant 80 minutes. Cinq analyses de pénétrométrie par échantillon sont réalisées à l'aide d'un texturomètre. Cette analyse est réalisée 15 jours après la production de la margarine, pour une cristallisation complète de celle-ci.

L'analyse de la fonte est réalisée dans une étuve à 44°C, toutes les 30 minutes, pendant 4h30. L'aspect visuel es produits est apprécié. Cette analyse est aussi réalisée 15 jours après la production de la margarine, pour une cristallisation complète de celle-ci.

Enfin, l'analyse sensorielle, encore réalisée 15 jours après la production de la margarine, pour une cristallisation complète de celle-ci, consiste en une appréciation du gout, de l'aspect, de la texture en bouche et de l'odeur des produits testés.

### ∘ Résultats et conclusions

Les résultats obtenus montrent que le taux de foisonnement n'influe pas sur le vieillissement de la margarine, même après six semaines. Les margarines ainsi produites sont stables.

La température de foisonnement semble être idéale entre 10 et 20°C.

Le foisonnement de la margarine diminue sa dureté, mais cela est facilement corrigé par l'ajout d'émulsifiant. Par ailleurs, il s'avère que le foisonnement joue un rôle positif dans la fonte de la margarine.

L'analyse structurale, physico-chimique et sensorielle des différents échantillons montre que le foisonnement de la margarine, a un taux de 6 et 9% environ (qui ne font pas partie de l'invention), permet de maintenir les propriétés organoleptiques d'une margarine classique (non diminuée en matière grasse) tout en diminuant le taux d'acides gras saturés dans celle-ci, de 6 à 8%.

Les valeurs nutritionnelles de la margarine sont ainsi optimisées, le profil de fonte obtenu est amélioré. La dureté de la margarine apparait comme étant légèrement modifiée, mais acceptable. La tartinabilité du produit se voit augmentée, la texture en bouche et l'aspect visuel du produit sont légèrement modifiés et appréciés par les experts.

Par ailleurs, la même analyse faite sur des margarines se foisonnées à un taux d'environ 70%, montrent qu'un tel foisonnement permet d'obtenir une margarine ayant des caractéristiques physico-chimiques acceptables, et présentant de plus des propriétés organoleptiques particulières : la margarine obtenue est très aérée, la texture en bouche est agréable, un léger pétillement est ressenti et le produit semble moins lourd à la consommation.

Le produit obtenu est innovant, la tartinabilité, le gout, et la texture en bouche sont modifiés, et particulièrement appréciés des experts.

### L'état de la technique pertinent:

La demande internationale WO 2006/039991 (UNILEVER) décrit un procédé d'obtention d'émulsions huile-dans-eau aérées comprenant des graisses végétales pour obtenir des produits laitiers acidifiés susceptibles de s'étaler. Dans ses exemples, l'émulsion réalisée est ainsi à base de lait caillé.

Le brevet GB 1261910 (COX & HEPBURN) vise un produit acide tartinable obtenu par acidification (action des bactéries lactiques) et correspondant à une émulsion huile-dans-eau (les matières grasses étant présentes ou introduites au sein de la phase aqueuse). Du gaz (diazote) peut être injecté dans cette préparation.

La demande internationale WO 2014/139762 (Article 54(3) CBE) décrit un procédé de fabrication d'une émulsion eau-dans-huile aérée comestible. Le taux de foisonnement dans ces émulsions est compris entre 33 et 50%.

## Revendications

1. Procédé d'obtention d'une margarine, ledit procédé comprenant les étapes de :
(i) préparation d'une phase grasse,
(ii) préparation d'une phase aqueuse,
(iii) incorporation de la phase aqueuse obtenue à l'étape (ii) dans la phase grasse obtenue à l'étape (i) sous agitation pour créer une émulsion,
(iv) pasteurisation de l'émulsion obtenue à l'étape (iii),
(v) cristallisation de l'émulsion pasteurisée à l'étape (iv), et
(vi) Foisonnement de l'émulsion simultanée ou consécutif à l'étape (v) de manière à obtenir un taux de foisonnement supérieur à 70%.

2. Procédé selon la revendication 1, **caractérisé en ce que** la phase grasse préparée à l'étape (i) comprend de la matière grasse d'origine végétale ou d'origine animale, de préférence d'origine végétale.

3. Procédé selon l'une quelconque des revendications 1 et 2, **caractérisé en ce que** l'émulsion obtenue comprend entre 20 et 85% de matière grasse.

4. Procédé selon l'une quelconque des revendications 1 à 3, **caractérisé en ce que** l'étape de foisonnement comprend l'introduction de diazote dans l'émulsion.

5. Procédé selon l'une quelconque des revendications 1 à 4, **caractérisé en ce que** l'émulsion obtenue comprend entre 30 et 70% de matière grasse.

6. Procédé selon l'une quelconque des revendications 1 à 5, **caractérisé en ce que** l'émulsion obtenue comprend entre 35 et 55% de matière grasse.

7. Margarine susceptible d'être obtenue par le procédé de la revendication 1.

8. Utilisation d'un taux de foisonnement supérieur à 70% d'une margarine en cours de cristallisation ou cristallisée pour l'obtention d'une margarine ayant une teneur réduite en acides gras saturés tout en maintenant des propriétés organoleptiques optimales.

## Patentansprüche

1. Verfahren zur Herstellung einer Wasser-in-ÖI-Emulsion vom Typ Brotaufstrichfett, wobei das genannte Verfahren die folgenden Schritte umfasst:
(i) Bereitung einer Fettphase,
(ii) Bereitung einer wässrigen Phase,
(iii) Einmischen der in Schritt (ii) erhaltenen wässrigen Phase in die in Schritt (i) erhaltene Fettphase unter Schütteln, um eine Emulsion zu erzeugen,
(iv) Pasteurisieren der in Schritt (iii) erhaltenen Emulsion,
(v) Kristallisieren der in Schritt (iv) pasteurisierten Emulsion, und
(vi) Quellen der Emulsion gleichzeitig mit dem oder auf den Schritt (v) folgend derart, dass ein Quellgrad größer als 50% erhalten wird.

2. Verfahren nach Patentanspruch 1, **dadurch gekennzeichnet, dass** die in Schritt (i) bereitete Fettphase Fett pflanzlichen Ursprungs oder tierischen Ursprungs enthält, vorzugsweise pflanzlichen Ursprungs.

3. Verfahren nach irgendeinem der Patentansprüche 1 und 2, **dadurch gekennzeichnet, dass** die erhaltene Emulsion zwischen 20 und 85% Fett enthält.

4. Verfahren nach irgendeinem der Patentansprüche 1 bis 3, **dadurch gekennzeichnet, dass** der Quellschritt die Einleitung von Stickstoff in die Emulsion umfasst.

5. Verfahren nach irgendeinem der Patentansprüche 1 bis 4, **dadurch gekennzeichnet, dass** die erhaltene Emulsion zwischen 30 und 70% Fett enthält.

6. Verfahren nach irgendeinem der Patentansprüche 1 bis 5, **dadurch gekennzeichnet, dass** die erhaltene Emulsion zwischen 35 und 75% Fett enthält.

7. Margarine, geeignet, nach dem Verfahren des Patentanspruches 1 erhalten worden zu sein.

8. Anwendung eines Quellgrades größer als 70% einer Margarine, während des Kristallisierens oder kristallisiert, um eine Margarine mit einem reduzierten Gehalt an gesättigten Fettsäuren zu erhalten und dabei optimale organoleptische Eigenschaften aufrechtzuerhalten.

## Claims

1. A method for obtaining a water-in-oil emulsion of the spreadable fats type, said method comprising the steps of :
(i) Preparing a fatty phase,
(ii) Preparing an aqueous phase,
(iii) Incorporating the aqueous phase obtained in step (ii) in the fatty phase obtained in step (i) under stirring in order to create an emulsion,
(iv) Pasteurizing the emulsion obtained in step (iii);
(v) Crystallizing the emulsion pasteurized in step (iv), and
(vi) Overruning the emulsion during or after step (v) in such a way as to obtain an overrun rate greater than 70%.

2. The method according to claim 1, wherein the fatty phase prepared in step (i) comprises vegetable origin or animal origin fat, preferentially vegetable origin fat.

3. The method according to any one of claims 1 and 2, wherein the obtained emulsion comprises between 20% to 85% of fat content.

4. The method according to any one of claim 1 to 3, wherein the overrunning step comprises the introduction of dinitrogen in the emulsion.

5. The method according to any one of claim 1 to 4, wherein the obtained emulsion comprises between 30% to 70% of fat content.

6. The method according to any claim 1 to 5, wherein the obtained emulsion comprises between 35% to 75% of fat content.

7. A Margarine which can be obtained by the process according to claim 1.

8. A use of an overrun rate comprised higher than 70% of a crystalizing margarine or crystalized margarine for obtaining a margarine with a reduced saturated fatty acid content while maintaining optimal organoleptic properties.
